# FASCICULE DE BREVET EUROPEEN

(11) **EP 0 556 122 B1**
(45) Date de publication et mention de la délivrance du brevet: **12.07.1995**
(21) Numéro de dépôt: 93400347.6
(22) Date de dépôt: 11.02.1993
(51) Int. Cl.: B61D 37/00, B60Q 3/02, B60R 5/00

(54) **Porte-bagages pour salle de voyageurs d'un véhicule ferroviaire**
Gepäckträger für den Passagierraum eines Schienenfahrzeuges
Luggage carrier for the passenger room of a railway vehicle

(30) Priorité: 14.02.1992 FR 9201697
(43) Date de publication de la demande: 18.08.1993
(73) Titulaire: GEC ALSTHOM TRANSPORT SA, 75116 Paris (FR)
(72) Inventeur: Ricaud, Patrick, F-17180 Perigny (FR); Mormede, Bernard, F-17220 La Jarne (FR)
(74) Mandataire: Fournier, Michel

(56) Documents cités:
- FR-A- 2 542 828
- US-A- 2 843 729
- US-A- 3 210 875

## Description

L'invention concerne un porte-bagages pour salle voyageurs d'un véhicule ferroviaire.

Les porte-bagages des salles voyageurs de véhicules ferroviaires sont constitués par des supports, par exemple des plaques de verre, maintenus par des consoles régulièrement espacées et fixées aux parois latérales des véhicules. Des volets sont généralement disposés sous les porte-bagages. Ils remplissent à la fois une fonction de design et une fonction mécanique. Ils permettent de supporter les liseuses, des interrupteurs, des haut-parleurs de sonorisation et de masquer les consoles ainsi que des composants électriques situés en partie haute des faces latérales (tubes fluorescents, convertisseurs, mécanismes de rideaux roulants, câbles électriques, etc...).

Un tel volet est constitué généralement d'un profilé d'aluminium relié d'une part à la face du véhicule et d'autre part au support porte-bagages. L'une des ces liaisons consiste en une articulation et l'autre en un verrouillage. Par déverrouillage le volet bascule pour permettre d'accéder aux équipements situés sous les porte-bagages et normalement cachés par le volet.

Jusqu'à présent, les volets étaient des bandes de largeur relativement faible par rapport à leur longueur. Pour des raisons de design, on désire maintenant des volets plus larges de manière à couvrir tout le dessous du porte-bagages contrairement aux dispositifs actuels. On les veut aussi plus cintrés pour augmenter l'espace destiné aux voyageurs. Ceci augmente encore leur largeur développée.

Des volets de grande largeur posent un certain nombre de problèmes. Lorsqu'on les déverrouille pour accéder aux parties cachées, ils ont un débattement insuffisant à cause de la présence des têtières de siège qui gênent leur basculement. Ce débattement insuffisant rend malaisé l'accès aux équipements logés sous le porte-bagages.

Un autre problème se pose pour la fabrication des volets, habituellement réalisés sous forme d'un profilé d'aluminium. En effet, le gabarit des filières est trop limité pour réaliser des volets de grande largeur.

Au montage des volets, un autre problème se pose qui est celui de leur alignement correct. Un volet a une longueur de plus de 2 m. Il devient alors très difficile d'obtenir une bonne continuité de volets de grande largeur et de plus fortement cintrés. Il existe alors, en plus de ce défaut visible, un jeu apparent qui diffuse la lumière émise par les tubes fluorescents. Un tel défaut d'alignement est inadmissible pour la qualité requise pour le design.

L'invention permet de pallier ces inconvénients. Elle concerne un volet sous porte-bagages constituée d'au moins deux éléments longitudinaux articulés, chaque élément pouvant être verrouillé. Un mécanisme d'alignement est prévu afin d'obtenir au montage un alignement correct des volets.

L'invention a donc pour objet un porte-bagages notamment d'une salle voyageurs d'un véhicule ferroviaire, susceptible d'être supporté par des consoles et sous lequel plusieurs volets sont susceptibles d'être placés bout à bout, chacun de ces, volets étant articulé longitudinalement pour pouvoir basculer et permettre l'accès à la partie située sous le porte-bagages, le volet étant maintenu en position fermée par verrouillage, caractérisé en ce que le volet est composé d'au moins deux éléments longitudinaux, chaque élément étant articulé sur l'un de ses côtés longitudinaux par des moyens d'articulation, l'autre côté longitudinal dudit élément étant équipé de moyens de verrouillage, les moyens d'articulation étant réglables en position par rapport aux consoles pour permettre l'alignement des volets. Cette disposition en plusieurs parties du volet présente l'avantage de permettre un débattement important de ces parties.

Les moyens d'articulation peuvent être disposés entre le volet et le porte-bagages. L'avantage de ceci est de rendre l'articulation invisible et d'assurer la continuité du profil d'un volet.

De préférence, le volet comprend deux éléments longitudinaux articulés selon leurs côtés longitudinaux adjacents. Chaque élément peut ainsi être prééquipé de manière indépendante.

L'articulation peut avantageusement être du type à charnière, les deux éléments longitudinaux étant articulés autour d'un même axe. La charnière, à cause de son inertie, procure l'avantage de conférer une bonne rigidité au volet.

La charnière peut comprendre des parties fixes supportant l'axe qui sont maintenues par des pièces d'appui fixées sur les consoles.

Les pièces d'appui peuvent être réglables sur les consoles pour permettre un déplacement angulaire de l'axe dans un plan transversal au véhicule ferroviaire. Les parties fixes de la charnière peuvent être réglables sur les pièces d'appui selon un mouvement de translation situé dans un plan transversal au véhicule ferroviaire. Par ces moyens, l'ensemble des lieux possibles de situation du noeud de la charnière est couvert, ce qui permet un parfait alignement d'un volet par rapport à ceux qui lui sont adjacents.

Le volet peut supporter des moyens de fixation de câbles électriques. Ceci permet de réduire les longueurs de liaisons électriques entre les faces latérales et les éléments électriques supportés par les volets. En effet, à partir d'une cosse électrique on peut faire partir plusieurs fils électriques et ainsi éviter les liaisons multiples jusqu'aux faces latérales. Il peut s'agir également de crosses de câblage permettant, le maintien de câbles électriques.

L'invention sera mieux comprise et d'autres avantages et particularités apparaîtront à la lecture de la description qui va suivre, donnée à titre non limitatif, accompagnée des dessins annexés parmi lesquels:
- la figure 1 est une vue en coupe transversale du volet sous porte-bagages selon l'invention,
- la figure 2 est une vue de détail montrant l'articulation des éléments du volet,
- la figure 3 est une vue correspondant à la coupe III-III de la figure 2,
- les figures 4 et 5 sont des vues de détail représentant les dispositifs de verrouillage du volet selon l'invention.

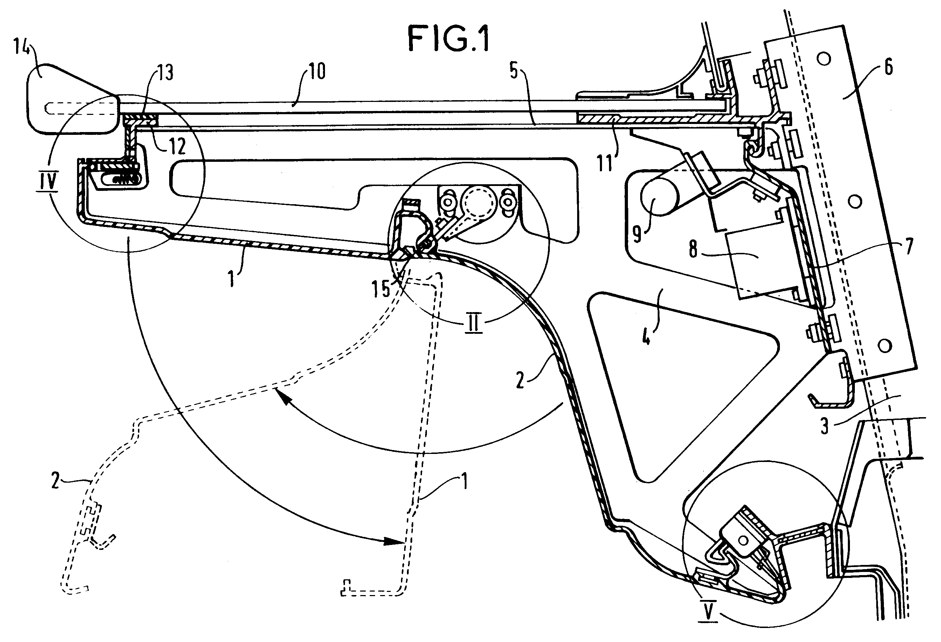

La vue en coupe transversale de la figure 1 montre une partie d'une face latérale 3 d'un véhicule ferroviaire sur laquelle sont fixées des consoles telles que celle référencée 4. Celle-ci formée d'une partie plane verticale terminée par une partie horizontale 5 pour lui donner, vue de profil, la forme d'un T. La fixation d'une console sur une face latérale peut se faire par une pièce intermédiaire 6 ajustée au montage de façon à disposer toutes les consoles au même niveau. La pièce intermédiaire 6 supporte également le module d'éclairage 7 qui comprend un convertisseur statique 8 et un tube fluorescent 9.

Les consoles 4 supportent le porte-bagages 10 qui est par exemple formé d'une plaque de verre trempé. Côté face latérale, la plaque 10 est maintenue par un profil support arrière 11. Côté intérieur du véhicule, la plaque 10 repose sur un profil support avant 12 par l'intermédiaire d'une butée en caoutchouc 13, et se termine par le nez de porte-bagages 14. Les profils 11 et 12 peuvent être réalisés, en aluminium.

Les consoles 4 et les équipements se trouvant à proximité sont masqués par le volet selon l'invention. Celui-ci comprend, dans l'exemple représenté ici, deux éléments longitudinaux 1 et 2 figurés en traits pleins quand le volet est en position verrouillée. Les éléments 1 et 2 sont articulés, selon leurs côtés longitudinaux adjacents, autour d'un axe 15 parallèle à la face latérale 3. L'axe d'articulation est disposé entre le volet et le porte-bagages, ce qui donne au volet un aspect uniforme et sans signe de discontinuité.

Le dispositif d'articulation ainsi que le dispositif de verrouillage sont détaillés dans les figures suivantes.On a représenté en traits pointillés les éléments 1 et 2 du volet en position maximale d'ouverture lorsque ces éléments sont déverrouillés. En position ouverte, l'élément 2 vient en butée contre l'élément 1 au niveau du noeud de rotation.

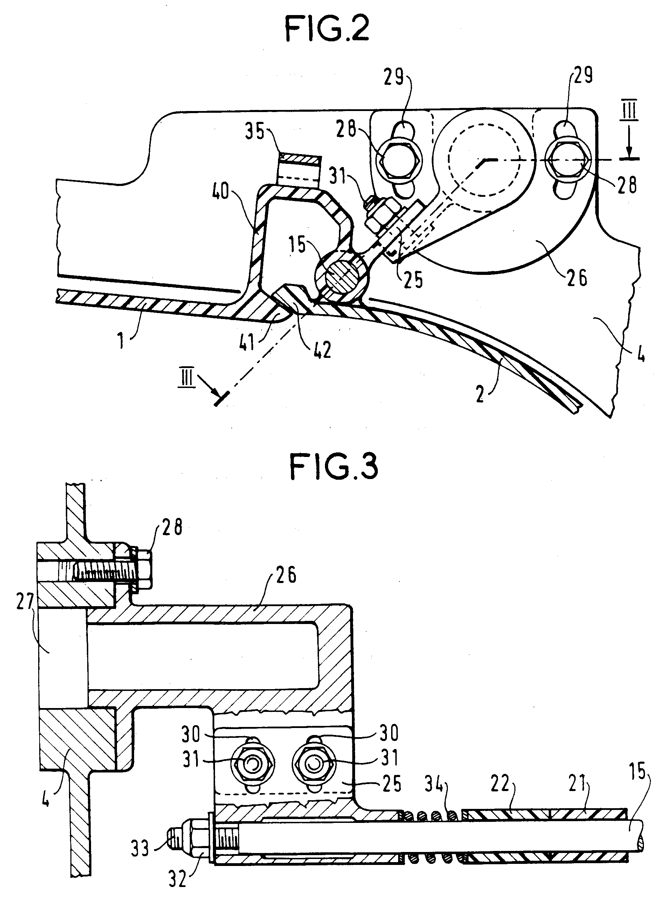

La figure 2 permet de mieux voir l'articulation des éléments 1 et 2 du volet. C'est une articulation qui est avantageusement du type à charnière, l'axe 15 réunissant alternativement tous les charnons 21 de l'élément 1 et 22 de l'élément 2 (voir la figure 3).

Les parties fixes 25 de la charnière supportent l'axe 15 et sont fixées sur les pièces d'appui 26 elles-mêmes fixées sur les consoles 4. Les pièces d'appui 26 reposent dans des logements circulaires 27 intégrés aux consoles 4. Les pièces d'appui 26 sont fixées sur les consoles par des vis 28 passant dans des lumières 29 des pièces d'appui. Comme on le constate sur la figure 2, ces lumières donnent aux pièces d'appui une certaine liberté en rotation pendant le réglage.

Les parties fixes 25 sont fixées sur les pièces d'appui 26 par boulonnage, les boulons 31 traversant les parties fixes par des lumières 30, ces lumières donnant aux parties fixes une certaine liberté en translation pendant le réglage.

L'axe 15 est immobilisé par vissage d'écrous 32 à ses extrémités 33. Un ressort 34 peut être monté sur l'axe pour assurer une bonne justaposition des charnons.

Comme on le voit sur la figure 2, les éléments du volet peuvent supporter des crosses 35 de maintien du câblage électrique. Ils supportent également différents appareillages non représentés tels que des liseuses, des haut-parleurs, des interrupteurs. Grâce aux crosses de câblage, le câblage peut être optimisé (par réduction des boucles de mou) lors des rotations. Ceci facilite la maintenance. En effet, il suffit de n'ouvrir que l'élément de volet correspondant aux équipements à contrôler.

La disposition illustrée par les figures 1 et 2 pour l'articulation des volets sur l'axe commun est particulièrement judicieuse. En effet, l'extrémité 40 en forme de U donnée à l'élément 1 permet la rotation des éléments 1 et 2 sans que ces éléments se gênent mutuellement. La forme biseautée des bords 41 et 42 des éléments 1 et 2 permet un bon recouvrement lorsque ces éléments sont verrouilés et empêche le passage à ce niveau de rayons lumineux émis par le tube 9.

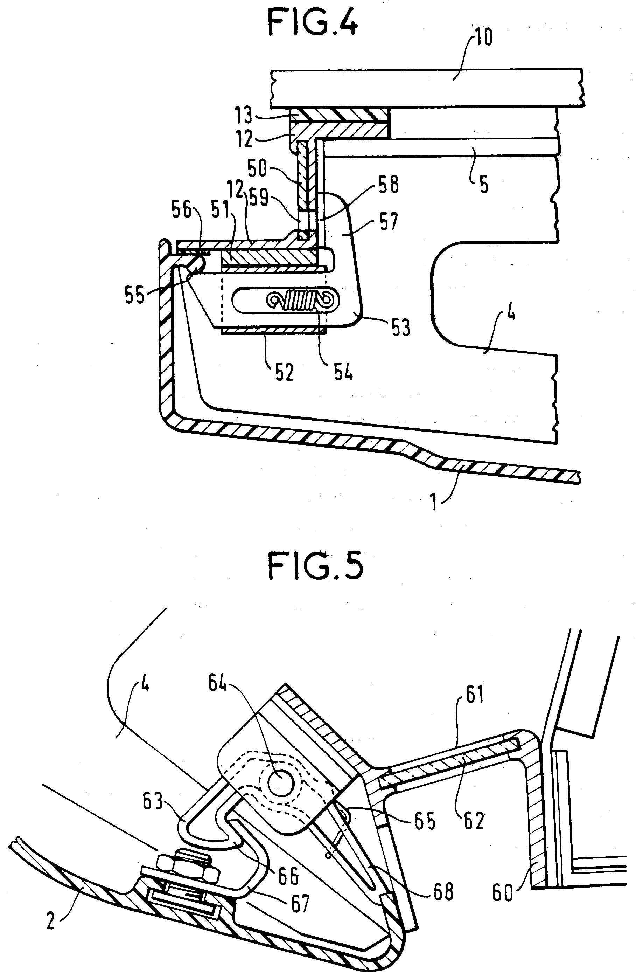

La figure 4 illustre le dispositif de verrouillage de l'élément 1 du volet. Le profil avant 12 possède des lumières réparties régulièrement sur toute sa longueur. Des plaques transparentes 50, en polycarbonate par exemple, sont disposées sur la partie verticale du profil 12 pour laisser diffuser à l'intérieur du véhicule la lumière émise par le tube 9. Les dispositifs de verrouillage sont disposés à des endroits déterminés. Ils sont fixés aux consoles 4 par des supports 51. Chaque support 51 est muni d'un fourreau 52 dans lequel peut coulisser un pêne 53. Un ressort 54 à l'une de ses extrémités reliée au fourreau 52, l'autre extrémité étant reliée au pêne 53. Il exerce donc sur le pêne une force dirigée vers l'intérieur du véhicule.

L'élément 1 du volet se termine par une partie verticale qui masque l'environnement de la console 4 jusqu'au profil support avant 12. L'extrémité de l'élément 1 est pourvue d'un doigt interne 55 qui, lorsque l'élément 1 est en position fermée, est bloqué entre le profil support avant 12 et le pêne 53. Une butée en caoutchouc 56 amortit la pression exercée par le doigt 55 sur le support avant 12.

Le pêne 53 comprend un bras de manoeuvre 57 dont une face vient, par l'intermédiaire d'une butée protectrice 58 en caoutchouc, en contact avec la face arrière de la partie verticale du profil support avant 12. A cet endroit, le profil et la plaque transparente 50 sont pourvus d'un trou 59. L'ouverture de l'élément 1 du volet se fait en engageant par exemple la pointe d'un tournevis dans le trou 59 pour repousser le pêne 53 et libérer le doigt 56. La fermeture de l'élément 1 se fait en poussant cet élément vers le haut, le doigt 55 repoussant le pêne 53 lorsqu'il arrive au contact de la face avant biseautée du pêne.

La figure 5 illustre le dispositif de verrouillage de l'élément 2 du volet. Un support de verrou 60 en aluminium est fixé sur la face latérale du véhicule. Sa face 61 dirigée vers le haut du véhicule est pourvue de lumières régulièrement espacées sur toute sa longueur. Des plaques transparentes 62, en polycarbonate par exemple, remplissent ces lumières et laissent diffuser la lumière émise par le tube 9 ( voir la figure 1) le long de la face latérale du véhicule. Le support 60 est équipé d'un verrou 63 connu de l'homme du métier sous le nom de verrou "cocotte". Il peut basculer d'avant en arrière autour d'un axe 64. Un ressort 65 tend à le faire basculer dans le sens inverse des aiguilles d'une montre.

En position de fermeture de l'élément 2 du volet, le crochet 66 du verrou retient la pièce recourbée 67 qui est solidaire de l'élément 2. En exerçant un effort vers le bas sur la partie arrière 68 du verrou 63, celui-ci est contraint de basculer dans le sens des aiguilles d'une montre et l'élément 2 est libéré. La fermeture de l'élément 2 se fait par simple poussée vers le haut de cet élément au niveau du verrou.

Chaque élément de volet se maintient par gravité en position ouverte, ce qui évite l'utilisation de compas ou autre système d'arrêt normalement nécessaires.

Il entre dans le cadre de la présente invention de réaliser des volets en plus de deux éléments en augmentant le nombre d'articulations et le nombre de dispositifs de verrouillage. Cependant, il apparaît qu'un volet composé de deux éléments longitudinaux représente la meilleure solution dans le cas présent.

## Revendications

1. Porte-bagages (10) notamment d'une salle voyageurs d'un véhicule ferroviaire, susceptible d'être supporté par des consoles (4) et sous lequel plusieurs volets sont placés bout-à-bout, chacun de ces volets étant articulé longitudinalement pour pouvoir basculer et permettre l'accès à la partie située sous le porte-bagages, le volet étant maintenu en position fermée par verrouillage, caractérisé en ce que ledit volet est composé d'au moins deux éléments longitudinaux (1, 2), chaque élément étant articulé sur l'un de ses côtés longitudinaux par des moyens d'articulation, l'autre côté longitudinal dudit élément étant équipé de moyens de verrouillage, les moyens d'articulation étant réglables en position par rapport aux consoles pour permettre l'alignement des volets.

2. Porte-bagages selon la revendication 1, caractérisé en ce que les moyens d'articulation sont disposés entre le volet et le porte-bagages.

3. Porte-bagages selon l'une des revendications 1 ou 2, caractérisé en ce que le volet comprend deux éléments (1, 2) longitudinaux articulés selon leurs côtés longitudinaux adjacents.

4. Porte-bagages selon la revendication 3, caractérisé en ce que l'articulation est du type à charnière, les deux éléments longitudinaux étant articulés autour d'un même axe (15).

5. Porte-bagages selon la revendication 4, caractérisé en ce que la charnière comprend des parties fixes (25) supportant ledit axe (15) et qui sont maintenues par des pièces d'appui (26) fixées sur les consoles (4).

6. Porte-bagages selon la revendication 5, caractérisé en ce que les pièces d'appui (26) sont réglables sur les consoles pour permettre un déplacement angulaire de l'axe dans un plan transversal au véhicule ferroviaire.

7. Porte-bagages selon l'une des revendications 5 ou 6, caractérisé en ce que les parties fixes (25) de la charnière sont réglables sur les pièces d'appui (26) selon un mouvement de translation situé dans un plan transversal au véhicule ferroviaire.

8. Porte-bagages selon l'une quelconque des revendications précédentes, caractérisé en ce qu'il supporte des moyens de fixation (35) de câbles électriques.

## Claims

1. A baggage rack (10) for the passenger space of a rail vehicle, the rack being supported by brackets (4) and under which a plurality of flaps are placed end to end, each flap being longitudinally hinged to be capable of swinging down and to give access to the portion situated beneath the baggage rack, the flap being held in a closed position by locking, said flap being characterized in that it is made up of at least two longitudinal elements (1, 2), each element being hinged along one of its longitudinal edges by hinge means, the other longitudinal edge of said element being fitted with locking means, the hinge means being adjustable in position relative to the brackets to enable the flaps to be aligned.

2. A baggage rack according to claim 1, characterized in that the hinge means are disposed between the flap and the baggage rack.

3. A baggage rack according to claim 1 or 2, characterized in that the flap comprises two longitudinal elements (1, 2) hinged along their adjacent longitudinal edge.

4. A baggage rack according to claim 3, characterized in that the hinge is of the type having a hinge pin, the two longitudinal elements being hinged about a common pin (15).

5. A baggage rack according to claim 4, characterized in that the hinge includes fixed portions (25) supporting said hinge pin (15) and held by support pieces (26) fixed to the brackets (4).

6. A baggage rack according to claim 5, characterized in that the support pieces (26) are adjustable on the brackets to enable angular displacement of the hinge pin in a plane transverse to the rail vehicle.

7. A baggage rack according to claim 5 or 6, characterized in that the fixed portions (25) of the hinge are adjustable on the support pieces (26) by translation movement in a plane transverse to the rail vehicle.

8. A baggage rack according to any preceding claim, characterized in that it supports fixing means (35) for electric cables.

## Patentansprüche

1. Gepäckträger (10), insbesondere für einen Fahrgastraum eines Schienenfahrzeugs, der von Stützen (4) getragen werden kann und unter dem mehrere Verkleidungen stirnseitig aneinander angrenzend angeordnet werden können, wobei jede dieser Verkleidungen in Längsrichtung gelenkig gelagert ist, um schwenken zu können und den Zugang zu dem unter dem Gepäckträger befindlichen Bereich zu erlauben, wobei die Verkleidung durch Verriegelung in der geschlossenen Stellung gehalten wird, dadurch gekennzeichnet, daß diese Verkleidung aus mindestens zwei Längselementen (1, 2) besteht, wobei jedes Element an einer seiner Längsseiten durch Gelenkmittel angelenkt ist, während die andere Längsseite des Elements mit Verriegelungsmitteln versehen ist, wobei die Gelenkmittel in Bezug auf die Stützen in ihrer Stellung regelbar sind, um die Ausrichtung der Verkleidungen zu ermöglichen.

2. Gepäckträger nach Anspruch 1, dadurch gekennzeichnet, daß die Gelenkmittel zwischen der Verkleidung und dem Gepäckträger angeordnet sind.

3. Gepäckträger nach einem der Ansprüche 1 oder 2, dadurch gekennzeichnet, daß die Verkleidung zwei Längselemente (1, 2) enthält, die entlang ihrer benachbarten Längsseiten angelenkt sind.

4. Gepäckträger nach Anspruch 3, dadurch gekennzeichnet, daß das Gelenk nach Art eines Scharniers ausgebildet ist, wobei die beiden Längselemente um die gleiche Achse (15) angelenkt sind.

5. Gepäckträger nach Anspruch 4, dadurch gekennzeichnet, daß das Scharnier feste Teile (25) aufweist, die die Achse (15) tragen und die von Stützteilen (26) gehalten werden, die auf den Stützen (4) befestigt sind.

6. Gepäckträger nach Anspruch 5, dadurch gekennzeichnet, daß die Stützteile (26) auf den Stützen einstellbar sind, um eine Winkelverschiebung der Achse in einer zum Schienenfahrzeug querliegenden Ebene zu ermöglichen.

7. Gepäckträger nach einem der Ansprüche 5 oder 6, dadurch gekennzeichnet, daß die feststehenden Teile (25) des Scharniers auf den Stützteilen (26) gemäß einer Translationsbewegung einstellbar sind, die sich in einer zum Schienenfahrzeug querliegenden Ebene befindet.

8. Gepäckträger nach einem beliebigen der vorhergehenden Ansprüche, dadurch gekennzeichnet, daß er Befestigungsmittel (35) für elektrische Kabel trägt.
